# EUROPEAN PATENT APPLICATION

(11) **EP 2 019 466 A1**
(43) Date of publication of application: **28.01.2009**
(21) Application number: 07122652.6
(22) Date of filing: 07.12.2007
(51) Int. Cl.: H02G 15/184

(54) **A cable connection electric field control device, and a cable connection provided therewith**

(71) Applicant: ABB Technology AG, 8050 Zurich (CH)
(72) Inventor: Palmqvist, Lars I, 441 30, Alingsås (SE); Papazyan, Ruslan, 722 15, Västerås (SE); Ming, Li, 723 41, Västerås (SE); Svahn, Jörgen, 441 35, Alingsås (SE)
(74) Representative: Dahlstrand, Björn

(57) **Abstract**

A cable connection electric field control device (2) comprising: an electrically insulating body (9) comprising an electrically insulating material; and a field-grading layer (10) embedded in said body (9). The field-grading layer (10) comprises at least two sub layers (11, 12) separated by an electrically insulating layer (13) comprising an electrically insulating material.

## Description

### TECHNICAL FIELD

The present invention relates to a cable connection electric field control device comprising an electrically insulating body comprising an electrically insulating material, and a field-grading layer embedded in said body.

The invention also relates to a cable connection arrangement comprising an electric power cable, said cable comprising a conductor, an electric insulation and a semiconducting layer;
and a connection element to which an end of the conductor is connected, wherein said semiconducting layer ends at a predetermined distance from said connection element, and wherein the connection comprises an electric field control device enclosing the cable along at least a part of said distance.

Typically, but not necessarily, the electric field control device according to the invention comprises a bushing, a cable termination or a cable joint. Preferably, the inventive field control device is of the resistive field control type.

Preferably, the cable connection, as well as the inventive field control device, is adapted to medium voltage applications, wherein medium voltage is referred to as voltages of above 1 kV and up to approximately 36 kV. It is, however, conceived that the invention may also be applicable to high voltage applications, i.e. above 36 kV.

### BACKGROUND OF THE INVENTION

Resistive/refractive stress-graded terminations of the slip-over type are well known. Having the shape of a flexible sleeve, they have the advantage of being easy to apply to a prepared end of a cable.

The stress-graded terminations of prior art has a stress-grading layer molded into a body of silicon rubber, defining the stress distribution along the termination, together with the local stray capacitance inside the cable. The length of the stress-grading layer, its distribution of resistivity and its dielectric constant are selected to provide a linear-voltage distribution outside of the termination at elevated stresses. At higher frequencies, the coupling between the resistance of the stress-grading layer and the stray capacitance results in a high electric-field strength near the edge of the outer semiconducting layer of the cable and will generate hot spots in that region. Such conditions with higher frequencies may, for instance, exist in contemporary converter-based transmission controllers that use Gate Turn Off switching components such as IGBT's or motor drives. Fast switching components like IGBT's may generate high frequency voltages which are superimposed upon the power frequency (50/60 Hz) voltage. The high frequency may, under special circumstances, cause insulation damages at voltage magnitudes that are well below the dielectric voltage withstand of the insulation at power frequency.

When subjected to medium and high voltage of high frequencies, the stress graded terminations of prior art will result in local high losses, which in its turn will result in local high temperatures. This will in its turn result in the creation of local voids in the termination and, finally to partial discharges therein and electric breakdown.

In order to cope with this situation caused by the use of fast switching components a geometric type of termination not considered to be frequency-dependent below the megahertz range, may be used to replace the stress graded terminations of the resistive field-grading type. This type of termination is a classical design and generally used for high- and extra-high voltages, although it also can be used for medium-voltage applications. The electrical-field distribution is determined only by the stray capacitance in the cable and in the termination itself. Because there is no resistive grading interacting with the capacitances, voltage distribution is mainly independent of frequency, with highest field strength occurring inside the homogeneous high-quality EPDM (Ethylene Propylene Diene Monomer) insulation used for the terminations. The geometric type of termination has a larger cross-section than the resistive type and requires more space for its installation. Accordingly, at least for medium voltage applications, it would still be preferred to make use of a termination of the resistive field-grading type, provided that the high frequency sensitivity of the latter type of termination could be improved.

### THE OBJECT OF THE INVENTION

It is an object of the present invention to present a cable connection electric field control device as initially defined, which, when compared to corresponding field control devices of resistive field grading type of prior art, presents an improved field distribution and is less prone to a generation of hot spots and electric breakdown when subjected to high voltage in combination with high frequencies. Accordingly, the invention aims at improving prior art control devices of the resistive field grading type.

### SUMMARY OF THE INVENTION

The object of the invention is achieved by means of the initially defined cable connection electric field control device, characterised in that said field grading layer comprises at least two sub-layers separated by an electrically insulating layer comprising an electrically insulating material. The electrically insulating layer will play an important role in this context. It may be regarded as a plurality of parallel capacitors, as seen in a longitudinal direction of the field control device, connecting the two adjacent sub-layers of field grading material. Each sub-layer, on its hand, may be regarded as a plurality of resistors connected in series in the longitudinal direction of the field control device. It is assumed that the longitudinal direction of the field control device corresponds to the longitudinal direction of a cable end the electric field of which is controlled by means thereof. Preferably, the sub-layer material of at least one of said sub-layers, preferably of a major part of said sub-layers, and most preferably all of said sub-layers, is a resistive field grading material, preferably with non-linear IV-characteristics. By means of tests it has been proven that the suggested inventive design presents better field distribution performance than a corresponding design using only one layer of field grading material (of twice the thickness of each of said sub-layers), or than when the two layers are not separated by said electrically insulating layer.

According to a preferred embodiment, at least two of said sub-layers are electrically interconnected to each other, and, preferably, all of said sub-layers are electrically connected to each other.

According to one embodiment, at least some of said electrically interconnected said sub-layers are directly connected to each other, and, preferably, all of said electrically interconnected sub-layers are directly connected to each other.

According to one embodiment, it is preferred that a least one of said sub-layers is arranged so as to be electrically connected to a semiconducting layer of a cable connected to the device when the device is in its operative position.

According to yet another embodiment, each of at least two sub-layers are arranged so as to be directly electrically connected to a semiconducting layer of a cable connected to said field control device when the field control device is in its operative position, said sub-layers thereby being indirectly electrically connected to each other.

According to one embodiment, at least a first of said sub-layers is at least partly exposed to an interior space of said field control device arranged to receive a cable to be enclosed by said device.

According to one embodiment, it is preferred that the sub-layers that are electrically directly connected to each other are connected to each other in a region in which at least one or more of said sub-layers is/are arranged so as to overlap a semiconducting layer of a cable connected to said field control device when the field control device is in its operative position.

The object of the invention is also achieved by means of the initially defined cable connection arrangement, characterised in that said electric field control device is an electric field control device according to the invention.

Preferably, said electric field control device overlaps said semiconducting layer in the longitudinal direction of the cable.

According to a preferred embodiment, an end of the field grading layer of the field control device overlaps said semiconducting layer of the cable.

It is also preferred that said field grading layer is electrically connected to said semiconducting layer of the cable.

Said connection may be a cable termination, a cable joint, wherein said connection element is a second cable, or a cable bushing.

Further features and advantages of the present invention will be disclosed in the following detailed description thereof.

### BRIEF DESCRIPTION OF THE DRAWINGS

Preferred embodiments of the invention will now be described, by way of reference, to the annexed drawing, on which:
Fig. 1 is a cross-section of a cable connection arrangement provided with an electric field control device according to the invention,
Fig. 2 is a detailed view, showing an alternative embodiment of the inventive electric field control device,
Fig. 3 is a view corresponding to that of fig. 1, but showing a cable connection arrangement of prior art.

### DETAILED DESCRIPTION OF THE INVENTION

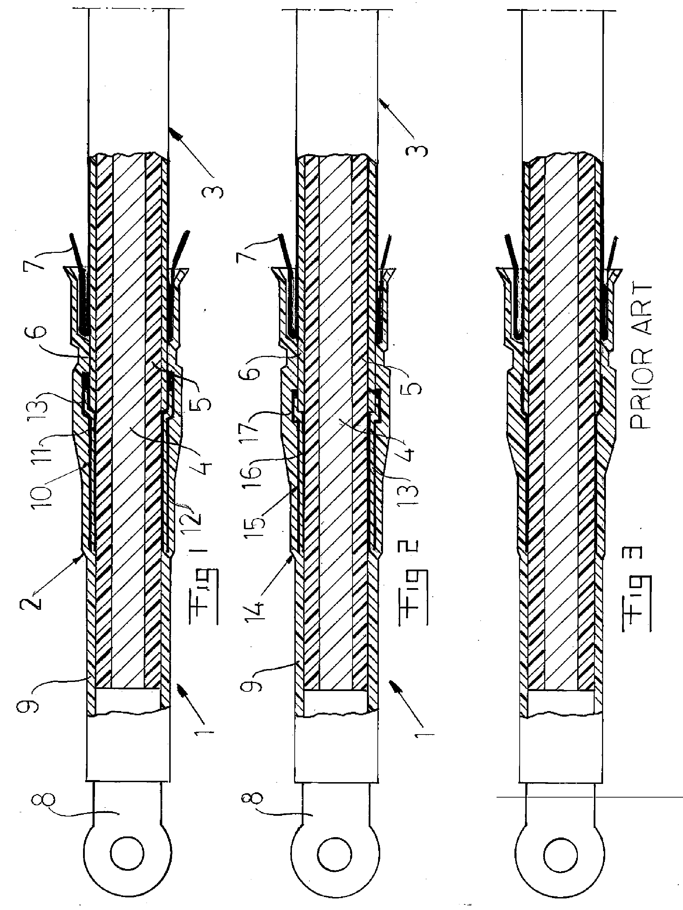

Fig. 1 shows a cable connection arrangement 1 according to the invention. The shown connection arrangement 1 is provided with a cable connection electric field control device 2 according to the invention, here designed as a medium voltage cable termination of the slip over type, SOT (trade name used by ABB). The termination has the shape of a flexible sleeve adapted to be slipped onto the end of an electric power cable. However, it should be understood that the features of the field control device 2 that will be described with reference to this specific application, i.e. a termination, are also valid for other applications, such as bushings, cable joints and fuse canisters.

The cable connection arrangement 1 comprises a cable 3 with a central electric conductor 4 and a tubular electric insulation 5 that encloses the conductor 4. Further, the cable 3 comprises a semiconducting layer 6 applied as a tubular layer outside the electric insulation 4 as seen in a radial direction of the cable 3. Outside the semiconducting layer 6 there is a provided a screen 7, preferably a metal. Preferably, the screen 7 is connected to ground (not shown), and presents ground potential.

In one end thereof, the conductor 4 is connected to a connection element 8, which might be any further electric power transmission equipment, as is well known within this field of technology.

At a predetermined distance from the region in which the conductor 4 meets the connection element 8 and is electrically connected thereto, the semiconducting layer 6 and the screen 7 end, thereby leaving an end part of the semiconducting layer 6 as well as the electric insulation 5 of the cable 3 exposed from outside. The field control device 2 is positioned on the outside of the end of the cable 3 such that it overlaps the electric insulation 5, an end of the semiconducting layer 6 and an end region of the screen 7. Preferably, the field control device 2 is slipped onto the cable. Preferably, there is also provided a layer (not shown) of a void-filling material such as a silicon grease on the part of the cable 3 on which the field control device is to be applied. Accordingly, the interface between the cable and the termination is filled with a high-quality silicon grease to avoid cavities that could lead to partial discharges. For outdoor use, the termination is provided with integrated sheds.

The field control device 2 comprises a body 9 of an electrically insulating material, preferably an elastomer such as EPDM or a silicone rubber. The control device 2 further comprises a field-grading layer 10 embedded in said body 9, wherein the field-grading layer 10 comprises two sub-layers 11, 12 divided by an electrically insulating layer 13 of an electrically insulating material. The electrically insulating body 9 is a tubular body, and the field-grading layer 10 is moulded into and embedded in the insulating body 9. Thereby, a first 11 of the sub-layers 11, 12 of the field grading layer has its inner peripheral surface in alignment with a surrounding inner peripheral surface of the insulating body 9, and facing the electric insulation 6 of the cable 3. The sub-layers 11, 12 are also generally tubular, parallel to each other and coaxial in relation to each other. Further, the sub-layers 11, 12 are of corresponding length and generally have the same position as seen in the longitudinal direction of the field control device 2. The sub-layers 11, 12 are of corresponding thickness and, preferably, are made of the same resistive field grading material presenting non-linear IV-characteristics. The electrically insulating layer 13 between the sub-layers should have insulating properties at least corresponding to those of the material of the surrounding insulating body 9. Preferably, the electrically insulating layer 13 comprises a corresponding material or the same material as the one of the insulating body 9. Typical field grading materials that form the sub-layers 11, 12 may be silicone rubber or EPDM filled with semiconducting material particles having an energy bandgap larger than 0 eV and smaller than 5 eV, preferably ZnO or SiC. The semiconducting material constitute less than 40% by volume of the field grading material, preferably less than 30% by volume and most preferably less than 20% by volume of the field grading material.

The sub-layers 11, 12 are directly electrically interconnected to each other in an end region in which they overlap the semiconducting layer 6. The first, inner, sub-layer 11 is in direct contact with the end of the semiconducting layer 6 of the cable 3. The second, outer, sub-layer 12 is fully embedded in the element formed by said insulating body 9, the first sub-layer 11 and the electrically insulating layer 13.

The length of the stress-grading layer 10, i.e. the sub-layers 11, 12, in the longitudinal direction of the device, its distribution of resistivity and its dielectric constant are selected to provide a linear-voltage distribution along the termination at power frequencies, as well as at higher frequencies. By means of the suggested design, an elevated electric-field strength near the edge of semiconducting layer 6 of the cable 3 is avoided.

Fig. 2 shows an alternative embodiment in which the electric field control device 14 comprises a stress-grading layer 15 comprising two sub-layers 16, 17. Each of the sub-layers 16, 17 of the stress grading layer 15 is arranged so as to be directly connected to the semiconducting layer 6 of the cable 3. The sub-layers 16, 17 are not directly connected to each other, whereby an indirect electric connection between the sub-layers is obtained through the semiconducting layer.

Fig. 3 shows an example of prior art, in which there is only provided a single stress-grading layer. This kind of design is more prone to result in hot spot generation and breakdown of the electric insulation 6 of the cable in comparison to the embodiments of the invention shown in figs. 1 and 2 when subjected to medium or high voltage in combination with elevated frequencies.

The invention is particularly advantageous in applications in which cable connections provided with the kind of resistive field grading devices described are connected to voltage sourced converter-based transmission controllers, in particular such ones that use gate turn off switching components and that introduce a high voltage stress on the materials. Accordingly, the invention also includes that the cable connection of the invention be connected to such a transmission controller. Such a controller may include an IGBT-based valve or any corresponding device that operates with pulse width modulation switching technique. On and off switching will create harmonic distortions with frequencies of an order corresponding to the switching frequency, that may stress some insulation systems of prior art excessively and eventually cause failures. However, the present invention presents a conceptual design that contributes to the prevention of such failures.

## Claims

1. A cable connection electric field control device (2, 14) comprising
- an electrically insulating body (9) comprising an electrically insulating material,
- a field-grading layer (10, 15) at least partly embedded in said body (9),
**characterised in that** said field grading layer (10, 15) comprises at least two sub layers (11, 12; 16, 17) separated by an electrically insulating layer (13) comprising an electrically insulating material.

2. A cable connection electric field control device according to claim 1, **characterised in that** at least two of said sub-layers (11, 12; 16, 17) are electrically interconnected to each other.

3. A cable connection device according to claim 2, **characterised in that** all of said sub-layers (11, 12; 16, 17) are electrically connected to each other.

4. A cable connection electric field control device according claim 2 or 3, **characterised in that** at least some (11, 12) of said electrically interconnected said sub-layers (11, 12) are directly connected to each other.

5. A cable connection electric field control device according to any one of claims 2-4, **characterised in that** all (11, 12) of said electrically interconnected sub-layers (11, 12) are directly connected to each other.

6. A cable connection electric field control device according to any one of claims 1-5, **characterised in that** a least one (11; 16, 17) of said sub-layers is arranged so as to be electrically connected to a semiconducting layer (6) of a cable (3) connected to the field control device (2, 14) when said device (2, 14) is in its operative position.

7. A cable connection electric field control device according to any one of claims 1-6, **characterised in that** each (16, 17) of at least two sub-layers (16, 17) are arranged so as to be directly electrically connected to a semiconducting layer (6) of a cable (3) connected to said field control device (2, 14) when the device is in its operative position, said sub-layers (16, 17) thereby being indirectly electrically connected to each other.

8. A cable connection electric field control device according to any one of claims 1-7, **characterised in that** at least a first (11, 16) of said sub-layers is at least partly exposed to an interior space of said field control device (2, 14) arranged to receive a cable (3) enclosed by said device (2, 14).

9. A cable connection electric field control device according to any one of claims 1-8, **characterised in that** the sub-layers (11, 12) that are electrically directly connected to each other are connected to each other in a region in which at least one or more of said sub-layers (11, 12) is/are arranged so as to overlap a semiconducting layer (6) of a cable (3) enclosed by said field control device (2, 14) when said field control device (2, 14) is in its operative position.

10. A cable connection electric field control device according to any one of claims 1-9, **characterised in that** said sub-layers (11, 12; 16, 17) define generally tubular layers.

11. A cable connection electric field control device according to any one of claims 1-10, **characterised in that** said sub-layers (11, 12; 16, 17) are coaxial and generally parallel to each other.

12. A cable connection electric field control device according to any one of claims 1-11, **characterised in that** said electrically insulating (9) body is a tubular body.

13. A cable connection electric field control device according to any one of claims 1-12, **characterised in that** it is a cable termination.

14. A cable connection electric field control device according to any one of claims 1-12, **characterised in that** it is a cable joint, wherein said connection element is a second cable.

15. A cable connection electric field control device according to any one of claims 1-12, **characterised in that** it is a bushing.

16. A cable connection arrangement (1) comprising an electric power cable (3), said cable (3) comprising
- a conductor (4),
- an electric insulation (5) and
- a semiconducting layer (6),
- a screen (7),
and a connection element (8) to which an end of the conductor (4) is connected, wherein said semiconducting layer (6) ends at a predetermined distance from said connection element (8), and wherein the connection comprises an electric field control device (2, 14) enclosing the cable (3) along at least a part of said distance, **characterised in that** said electric field control device (2, 14) is an electric field control device according to any one of claims 1-15.

17. A cable connection arrangement (1) according to claim 16, **characterised in that** said electric field control device (2, 14) overlaps said semiconducting layer (6) in the longitudinal direction of the cable (3).

18. A cable connection arrangement (1) according to claim 16 or 17, **characterised in that** an end of the field grading layer (10, 15) of the electric field control device overlaps said semiconducting layer (6) of the cable (3).

19. A cable connection arrangement (1)according to any one of claims 16-18, **characterised in that** said field grading layer (10, 15) is electrically connected to said semiconducting layer (6) of the cable (3).
